# EUROPÄISCHE PATENTANMELDUNG

(11) **EP 1 195 994 A2**
(43) Veröffentlichungstag der Anmeldung: **10.04.2002**
(21) Anmeldenummer: 01122354.2
(22) Anmeldetag: 19.09.2001
(51) Int. Cl.: H04N 7/26

(54) **Verfahren zur Codierung und Decodierung von Bildsequenzen sowie Einrichtungen hierzu**

(30) Priorität: 29.09.2000 DE 10048735
(71) Anmelder: ROBERT BOSCH GMBH, 70442 Stuttgart (DE)
(72) Erfinder: Bauer, Sven, 31134 Hildesheim (DE); Siepen, Peter, 46049 Oberhausen (DE); Schmale, Bernd, 31139 Hildesheim (DE); Boltz, Marco, 31134 Hildesheim (DE); Heising, Guido, 10965 Berlin (DE); Smolic, Aljoscha, 10863 Berlin (DE)

(57) **Zusammenfassung**

Bei der Codierung von Bildsequenzen wird vor der eigentlichen Codierung geprüft, ob für ein Bild ein vorgegebener Kapazitätsparameter des Encoders (3) erreicht wird. Es erfolgt dann eine Reduzierung des Codierformates. Die Codierung wird in diesem reduzierten Codierformat vorgenommen.

Dieses Verfahren kann mit jedem Codierverfahren kombiniert werden, da ein Eingriff in das eigentliche Codierverfahren nicht notwendig ist.

## Beschreibung

### Stand der Technik

Die vorliegende Erfindung betrifft ein Verfahren zur Codierung und Decodierung von Bildsequenzen sowie eine Codiereinrichtung und eine Decodiereinrichtung.

Zur Videocodierung werden zur Zeit in der Regel die MPEG-Standards der ISO (MPEG-1, -2 und -4) oder die H.26x-Standards der ITU-T (H.261, H.263) verwendet. Sie ermöglichen es, eine digitale Videosequenz mit vorgegebener Bildgröße und Bildwiederholrate zu komprimieren und aus dem resultierenden Bitstrom die Originalsequenz mit einem Qualitätsverlust zu rekonstruieren. Der Qualitätsverlust hängt wesentlich vom Kompressionsgrad, d.h. dem Verhältnis von Eingangsdatenrate zu Ausgangsdatenrate des Encoders ab. Aber auch der zu codierende Bildinhalt sowie das verwendete Codierverfahren haben einen großen Einfluß auf die Qualität des rekonstruierten Videos. Die Qualität kann bei den zuvor genannten Verfahren je nach der Anforderung der Anwendung auf zwei Arten gesteuert werden. Es kann entweder eine annähernd konstante Bildqualität eingestellt werden, wobei sich daraus aufgrund der schwankenden Komplexität der Bildinhalte einer Sequenz eine Codierung mit variabler Bitrate ergibt, oder es wird eine näherungsweise konstante Datenrate eingestellt, wodurch sich eine schwankende Bildqualität ergibt. Die meisten Applikationen verlangen eine Codierung entsprechend dem zweiten Fall, bei dem eine Regelung der Datenrate erfolgt.

Die Datenratenkontrolle wird vom jeweiligen Encoder vorgenommen. Sie ist jedoch in keinem der Standards normativ vorgegeben. Jedoch werden Mechanismen zur Einflussnahme auf die Rekonstruktionsqualität und somit auf die sich ergebende Datenrate zur Verfügung gestellt. Das gebräuchlichste Steuerelement ist die Variation des Quantisierungsparameters (QP) für die Codierung der Transformationskoeffizienten. Im MPEG-4 Standard [1] kann mit jedem Makroblock eine Änderung des Parameters bezogen auf den vorherigen QP übertragen werden. Bei MPEG-2 und H.263 [2] kann jeweils der absolute QP mitgeteilt werden. Der QP kann hier 32 unterschiedliche Werte annehmen, wodurch ein Makroblock mit 32 verschiedenen Qualitäten und Bitraten codiert werden kann. Ein weiteres Element zur Ratenkontrolle ist die Änderung der Anzahl der zu codierenden Bilder. So wird einerseits zu Beginn der Codierung vom Anwender eine maximale Bildrate festgelegt, mit der codiert werden soll, beispielsweise soll nur jedes zweite Bild der Bildfolge codiert werden. Andererseits können bei einigen Codierverfahren auch bei Bedarf einzelne Bilder zusätzlich ausgelassen werden. Diese sogenannten Frameskips werden meistens erst dann eingesetzt, wenn eine weitere Vergrößerung des QP nicht mehr möglich ist oder zu einer inakzeptablen Bildqualität führen würde.

Bei der Videocodierung mit einer fest vorgegebenen Bitrate ist es notwendig, den Encoder so zu steuern, dass die geforderte Bitrate eingehalten und gleichzeitig eine möglichst hohe Bildqualität erreicht wird. Diese Encodersteuerung wird als *Rate Control* bezeichnet. Das Mittel zur Einstellung der Bitrate ist in erster Linie die Quantisierung (*Quantisiererparameter* QP), die in Abhängigkeit von den bereits verbrauchten Bits variiert wird. Von Struktur und Bewegung komplexes Videomaterial wird gröber quantisiert als einfaches. Dies kann allerdings bei sehr komplexen Inhalten zu störenden Blockartefakten führen. Im Extremfall kann es geschehen, dass die geforderte Bitrate trotz gröbster Quantisierung nicht eingehalten werden kann. In diesem Fall müssen dann einzelne Bilder ausgelassen, d.h. nicht codiert und übertragen werden. Stattdessen wird das jeweils vorhergehende Bild eingefroren. Ein solches *Frameskipping* führt allerdings zu extrem störenden Ruckeleffekten, insbesondere bei Video im Zeilensprungformat, bei dem durch den zeitlichen Versatz der beiden Halbbilder die Bewegung scheinbar zurückspringt.

Aus der EP 0 346 635 B1 ist es bekannt, in Abhängigkeit des Füllstandes des Bitstrompuffers bei der Codierung nur jene Bildblöcke zu übertragen, die den größten Restfehler aufweisen.

Um Frameskipping auszuschließen, besteht die Möglichkeit die Bildsequenz von vornherein in einem Format zu codieren, das das Auftreten von Frameskipping praktisch ausschließt, d.h. eine entsprechend geringe zeitliche und örtliche Auflösung zu verwenden. Untersuchungen haben allerdings ergeben, dass die subjektive Qualität mit steigender Auflösung des Codierformats steigt [1]. Somit liegt ein Optimierungsproblem für das Codierformat vor, dessen gegenläufige Einflussgrößen die Vermeidung von Frameskipping bei komplexem bzw. die größtmögliche Qualität bei normalen Videobildsequenzen sind. Bei Verwendung eines festen Codierformats muß dabei ein Kompromiß eingegangen werden.

### Vorteile der Erfindung

Durch die Maßnahmen der Patentansprüche wird die zuvor angesprochene Kompromißlösung entbehrlich. In Abhängigkeit von Umschaltkriterien, die aus Kapazitätsparametern des Encoders, wie Füllstand des Bitpuffers und/oder dem Quantisierungsparameter QP abgeleitet werden, wird das Codierformat automatisch variiert und damit an den Inhalt der Videobildsequenz angepaßt. Signalisieren die Umschaltkriterien, dass komplexes Material vorliegt (hoher Füllstand des Bitpuffers, grobe Quantisierung), wird Frameskipping verhindert, indem das Codierformat reduziert wird, d. h. die horizontale und ggf. auch die vertikale Auflösung des Eingangssignals des Encoders durch Filterung und Unterabtastung verringert wird. Bei normalem Material wird in voller Auflösung codiert und damit maximale Qualität gewährleistet. Dazu sind entsprechende Umschaltkriterien von geringer auf volle Auflösung notwendig.

Die Erfindung stellt ein Verfahren zur Verfügung, das unabhängig vom verwendeten Codierverfahren, eine adaptive Reduktion der Ausgangsdatenrate ermöglicht. Die Adaption kann beispielsweise aufgrund des aktuellen Füllstandes des Bitstrompuffers des Encoders erfolgen, mit dem Ziel einen Über- oder Unterlauf des Puffers zu verhindern. Damit kann leichter dynamisch auf zeitliche Änderungen der zur Verfügung stehenden Kanalbandbreite reagiert werden und es können auch durch die Codierung hervorgerufene zeitliche Schwankungen der erzeugten Bitrate besser abgefangen werden.

Ein wesentlicher Vorteil des beschriebenen Verfahrens ist, dass es prinzipiell mit jedem Videocodierverfahren kombiniert werden kann, da es nicht erforderlich ist, in den eigentlichen Codiervorgang einzugreifen. Die drei Hauptelemente des Verfahrens liegen außerhalb des Codierverfahrens. Es sind a) eine dem Encoder vorgeschaltete adaptiv gesteuerte Unterabtastung von Eingangsbildern verbunden mit einem syntaktischen Neubeginn der Codierung bei jeder Änderung der Auflösung, b) eine entsprechende decoderseitige adaptive Überabtastung der decodierten Bilder mit geringerer Auflösung und c) ein Mechanismus zur Übertragung der Nebeninformation, wie die einzelnen decodierten Videoabschnitte zu einer zusammenhängenden Sequenz mit nur einer Bildauflösung zusammengesetzt werden müssen. Die Übertragung der Nebeninformation ist nicht zwingend erforderlich, in diesem Fall muss jedoch dem Decoder bzw. einem dem Decoder nachgeschalteten Kompositor vorher bekannt sein, dass er die einzelnen Sequenzabschnitte wieder zu einem Video mit einer bestimmten Auflösung zusammenfügen muss. Von Vorteil, jedoch nicht zwingend erforderlich, ist der Zugriff auf Parameter, die den aktuellen Zustand des Encoders widerspiegeln, um eine bessere Entscheidung über die zu wählende Bildauflösung treffen zu können.

Dieses Verfahren stellt eine Verbesserung gegenüber den bisher bekannten Codierverfahren dar, da es eine zusätzliche Möglichkeit zur Reduktion der Datenrate zur Verfügung stellt, mit der es beispielsweise möglich ist, die visuell sehr störenden Frameskips auch dann noch zu vermeiden, wenn es mit den meisten bekannten Verfahren nicht mehr möglich ist.

Mit den eingangs genannten Codierelementen kann für die meisten Anwendungsfälle eine funktionstüchtige Datenratenreglung erzeugt werden. Die Qualität der decodierten Videos hängt jedoch sehr stark von der Steuerung der einzelnen Elemente ab, d.h. von der Entscheidung, wann und in welcher Form welches Element zur Verringerung der Datenrate eingesetzt wird. Dabei sollte berücksichtigt werden, dass jedes der drei Elemente unterschiedliche Auswirkungen auf die visuelle Bildqualität hat. Die Erhöhung des QP führt zu zunehmend sichtbaren Störungen in den Bildern. Das Frameskipping führt zu sehr störenden ruckelnden Bewegungen, da die fehlenden Bilder durch kurzfristiges Einfrieren der zuletzt decodierten Bilder kompensiert werden. Die Codierung mittels Reduzierung der örtlichen Auflösung führt zu unschärferen Bildern mit geringerem Detailgehalt. Diese Störung wird in der Regel vom Betrachter als am wenigsten unangenehm empfunden, während das Frameskipping zu einer starken Beeinträchtigung des subjektiven Bildeindrucks führt und daher nach Möglichkeit vermieden werden muß. Wird zu einem Zeitpunkt während der Codierung bei einem Codierverfahren, das nicht bereits über einen Modus zur auflösungsreduzierten Codierung verfügt, bereits der höchstmögliche QP verwendet, so gibt es kaum noch Möglichkeiten die Datenrate wesentlich zu verringern ohne Frameskipping zu verwenden. Für diese Codierverfahren ist der Einsatz der erfindungsgemäßen Maßnahmen außerhalb des eigentlichen Codierverfahrens zur Vermeidung von Frameskipping von großem Vorteil.

Ab der Version 2 des Standards MPEG-4 und bei H.263 wird ein Verfahren zur Verfügung gestellt, das zur Verringerung der Datenrate genutzt werden kann. Das bei MPEG-4 "Dynamic Resolution Conversion" genannte Verfahren wird in leicht modifizierter Form im H.263 Annex Q mit "Reduced Resolution Update Mode" bezeichnet. Ersteres ist bisher nur im "Advanced Realtime Simple Profile" (ARTS) von MPEG-4 verankert. Bei diesem Verfahren wird ein Bild entweder mit einer dem Original entsprechenden örtlichen Auflösung oder mit einer um Faktor zwei in jede Richtung verringerten Auflösung codiert. Hierdurch wird die Anzahl der zu codierenden Makroblöcke auf ein Viertel reduziert, wodurch sich auch die Bitanzahl verringert. Für den Fall der Codierung mit verringerter Auflösung wird jedoch nicht wie bei der Erfindung die Größe des Eingangsbildes vor der Codierung reduziert, sondern es wird nur das Prädiktionsfehlerbild nach Abzug der zeitlichen Prädiktion vom Original, die beide in Originalauflösung vorliegen, mittels eines Unterabtastungsfilters örtlich reduziert. Das reduzierte Fehlerbild wird anschließend der üblichen Transformationscodierung zugeführt. Encoder- und decoderseitig wird nach inverser Transformation das rekonstruierte Fehlerbild wieder mittels eines Überabtastungsfilters auf Originalgröße gebracht und mit der Prädiktion zum Ausgangsbild addiert. Dieses wird somit in Originalauflösung zur Verfügung gestellt, unabhängig von der verwendeten Auflösung während der Codierung.

Bei der Erfindung kann die Reduzierung des Codierformates in einem Vorschaltmodul vorgenommen werden, was den Vorteil hat, dass der Einsatz der Erfindung unabhängig vom verwendeten Videocodierverfahren ist.

Das Verfahren nach der Erfindung unterscheidet sich zu den zuvor beschriebenen Verfahren Dynamic Resolution Conversion bei MPEG-4 und Reduced Resolution Update Mode bei H.263 in mehreren Punkten. Diese beiden Verfahren können nur dann standardkonform verwendet werden, wenn ein entsprechendes Anwendungsprofil des Standards gewählt wird, in dem das Verfahren enthalten ist. Wird ein anderes Profil gewählt, können die Verfahren nicht verwendet werden, bzw. falls sie trotzdem verwendet werden, entsteht ein nicht standardkonformer Bitstrom, der von konformen Decodern nicht decodiert werden kann. Die bei der Erfindung erzeugten Bitströme können jedoch von den zugehörigen konformen Decodern decodiert werden. Die beiden standardisierten Verfahren Dynamic Resolution Conversion und Reduced Resolution Update Mode können nur modifiziert werden, wenn auch der Standard geändert wird. Diese Einschränkung gilt für die Erfindung nicht. Bei der Erfindung ist es beispielsweise möglich, die Auflösungsreduktion nur in einer örtlichen Richtung durchzuführen oder eine Reihe von unterschiedlichen Unterabtastungsfaktoren und Filtern zuzulassen und als Nebeninformation zu übertragen. Die standardisierten Verfahren sind jedoch auf die Unterabtastung um Faktor 2 in jede örtliche Richtung und die Verwendung eines bestimmten Filters begrenzt.

Der Einsatz der Erfindung ist nicht an ein spezielles Eingangsformat oder eine spezielle Zieldatenrate gebunden. Vielmehr kann das Prinzip der relativen Reduktion der horizontalen und ggf. vertikalen Auflösung, gesteuert durch auf die jeweilige Zieldatenrate ausgerichtete Umschaltkriterien, mit jedem beliebigen Eingangsformat und Übertragungskanal kombiniert werden.

Die Umschaltung des Codierformats wird vorzugsweise realisiert, indem der Codiervorgang komplett neu initialisiert wird. In einem MPEG-4 Encoder wird z.B. ein neuer VOL-Header und ein INTRA-codiertes Bild gesendet. Aus dem jeweiligen Bitstrom wird somit nicht ersichtlich, dass es sich ggf. um ein reduziertes Format handelt, das am Decoder wieder entsprechend vergrößert werden muß. Die Signalisierung muß daher auf Systemebene erfolgen, bzw. dem jeweiligen Decoder muß bekannt sein, welche Codierformate wie behandelt (d.h. vergrößert) werden müssen.

### Zeichnungen

Anhand der Zeichnungen werden Ausführungsbeispiele der Erfindung näher erläutert. Es zeigen
Figur 1 ein Blockschaltbild einer Codiereinrichtung nach der Erfindung und
Figur 2 ein Blockschaltbild einer entsprechenden Decodiereinrichtung.

### Beschreibung der Ausführungsbeispiele

Am Beispiel eines MPEG-4 Codecs wird die Erfindung näher erläutert. Exemplarisch wird ein Quellformat von CCIR601 als Eingangsformat bei einer Datenrate von 1,5 Mbit/s beschrieben. Anstelle von MPEG-4 kann die Erfindung auch in Zusammenhang mit anderen Videocodierverfahren, z. B. MPEG-2 oder H. 263 verwendet werden.

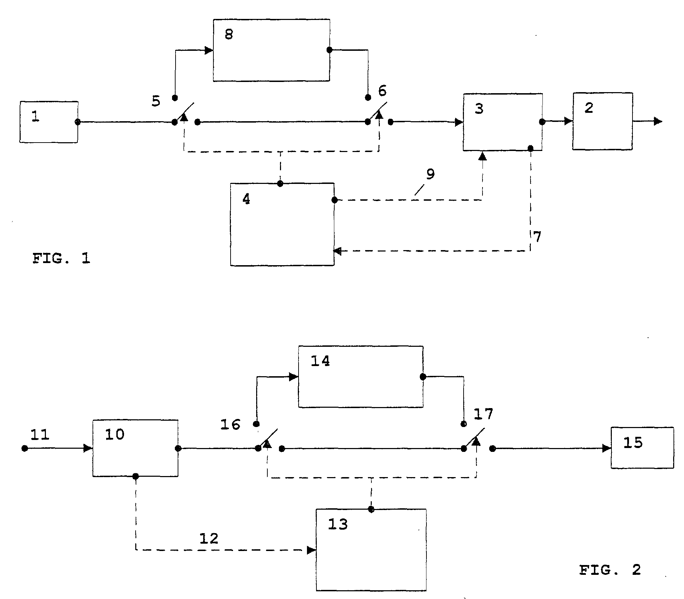

Vor der Codierung jedes Einzelbildes der Eingangsbildsequenz, die von der Videoquelle 1 in Figur 1 geliefert wird (außer dem ersten Bild), wird anhand eines Pufferfüllstandes des Bitstrompuffers 2 am Ausgang des Encoders 3 über eine Reduktion der Auflösung entschieden. Dieser Pufferfüllstand reguliert sich über die bei der Codierung der vorherigen Bilder verwendeten Bits und den durchschnittlich vorgesehenen Bits pro Bild. Damit schwankt der Puffer immer um die Abweichung von vorgesehenen und tatsächlich benötigten Bits. Überschreitet der Puffer einen festgesetzten prozentualen Füllstand als vorgegebenen Kapazitätsparameter, wird eine Reduktion der Auflösung vorgenommen.

Fällt die Entscheidung über eine Reduktion aufgrund eines Pufferfüllstands im unkritischen Bereich negativ aus, wird die nachfolgende Codierung in der vollen Auflösung durchgeführt. Die Videoquelle 1 ist dann über die Schalter 5 und 6 direkt mit dem Eingang des Encoders 3 verbunden.

Fällt die Entscheidung positiv aus, wird im nachfolgenden Vorgang des Einlesens des Originalbildes aus der Eingangssequenz eine Unterabtastung mit Tiefpaßfilter vorgenommen. Die Luminanz- und Chrominanzkomponenten des Eingangsbildes werden in ihren horizontalen wie vertikalen Größenausmaßen auf die Hälfte reduziert. Ggf. wird nur eine horizontale Unterabtastung vorgenommen. In diesem Falle erhält die Umschaltsteuerung 4 vom Encoder 3 einen Umschaltbefehl, worauf sie die beiden Schalter 5 und 6 so umsteuert, dass das Vorschaltmodul 8 zur Reduzierung des Codierformates in den Signalweg zwischen Videoquelle 1 und Encoder 3 zu liegen kommt.

Die nachfolgende Codierung wird dann in reduzierter Auflösung durchgeführt, d.h., daß sehr viel weniger Eingangsdaten (Pixel- und Makroblockanzahl) verarbeitet werden müssen.

Da das Vorschaltmodul 8 kein integraler Bestandteil eines Encoders 3 ist, sondern vielmehr als Vorschaltmodul mit verschiedenen Videoencodern kombiniert werden kann, kann eine erfolgte Reduktion der Auflösung nicht im Videobitstrom signalisiert werden. Vielmehr wird die jeweilige Encodiersession abgebrochen und eine neue Session mit dem neuen Format initialisiert. Im Falle eines MPEG-4 Encoders wird der aktuelle *Video Object Layer* (VOL) abgebrochen und ein neuer VOL-Header geschrieben. Die Umschaltung der Schalter 5 und 6 initialisiert durch das Signal 9 diesen neuen VOL-Header. Der neue VOL beginnt mit einem INTRA-codierten Bild (d.h. unabhängig von anderen Bildern codiert, keine zeitliche Prädiktion) im neuen Format.

Die Signalisierung der Umschaltung kann entweder auf Systemebene erfolgen (z.B. durch MPEG-4 Scene Composition Information) oder dem Decoder im jeweiligen System muß bekannt sein, wie mit bestimmten ankommenden Codierformaten für die Darstellung zu verfahren ist. So wird z.B. bei einem Display für das CCIR601-Format jedes kleinere Codierformat entsprechend vergrößert. Das dekodierte Video wirkt an diesen Stellen etwas unschärfer, dafür werden Blockartefakte reduziert, sowie Frameskipping verhindert.

Vor Bearbeitung des nächsten Bildes wird zur Regulierung des Pufferfüllstandes die für die Codierung des Bildes benötigte Menge Bits registriert und zum Puffer hinzuaddiert. Gleichzeitig wird auch die durchschnittlich vorgesehene Bitmenge subtrahiert.

Hat sich durch die geringere Menge Bits der Füllstand des Puffers wieder unter eine bestimmte Grenze entwickelt, wird in dem erneut beginnenden Schleifendurchlauf auf die volle Auflösung zurückgeschaltet.

Dazu wird der aktuelle VOL wiederum abgebrochen und eine neue Encodiersession durch das Schreiben eines neuen VOL-Headers mit voller Auflösung initialisiert. Die Unterabtastung ist dann nicht mehr notwendig.

Dieses Zurückschalten auf die ursprüngliche Auflösung bzw. das Herunterschalten der Auflösung wird durch einen Hysterese-Mechanismus eingeschränkt. Dieser Mechanismus gibt vor, daß eine bestimmte (definierbare) Mindestanzahl an Einzelbildern der Sequenz in der Auflösung unverändert bleiben muß, unabhängig vom Pufferfüllstand. Auf diese Art wird ein zu häufiges Herunter- bzw. Zurückschalten verhindert, das ansonsten zu unangenehmen Flackereffekten führen kann.

Der Decoder 10 (z.B. gemäß MPEG-4) empfängt und decodiert den ankommenden Bitstrom 11 (Fig. 2), an seinem Ausgang steht das Video im Codierformat zur Verfügung. Wie erwähnt, wird eine etwaige Formatreduktion entweder auf Systemebene signalisiert (12), oder dem jeweiligen Decoder 10 ist bekannt, welche Codierformate wie behandelt (d.h. vergrößert) werden müssen. Im letzteren Fall erfolgt die Umschaltungssteuerung 13 am Decoder 10 somit direkt und einzig durch das Codierformat.

Wurde von der Umschaltsteuerung 13 ein reduziertes Codierfomat erkannt, wird in den Signalweg zwischen Decoder 10 und Display 15 die Codierformatänderungseinheit 14 über die Schalter 16 und 17 eingeschleift. Diese ist eingerichtet eine Bildpunktinterpolation innerhalb solcher Bildbereiche vorzunehmen, deren Bildinformation zuvor mittels Vorschaltmodul 8 ausgedünnt wurde. Zum Display 15 gelangt so eine Bildinformation im ursprünglichen Quellformat, z. B. CCIR601.

Die adaptive Auflösungsreduktion wird hauptsächlich in Abschnitten großer Komplexität der zu codierenden Videosequenz aktiviert. Diese Abschnitte sind vor allem durch sehr viel Veränderung bzw. Bewegung in der Szene charakterisiert, weshalb eine Verringerung der Auflösung aufgrund der ohnehin vorhandenen Bewegungsunschärfe subjektiv kaum auffällt.

In umfangreichen Untersuchungen wurde ausgewähltes Testmaterial verwendet, bei dem mit herkömmlicher Codierung ohne adaptive Auflösungsreduktion, d.h. einem festen Codierformat, bis zu 20% der Einzelbilder übersprungen werden. Dies führt aufgrund der beschriebenen Ruckeleffekte und Blockartefakte insbesondere in Abschnitten mit Szenenüberblendung oder schneller Bewegung zu einer geringen subjektiven Qualität. Durch Einsatz der adaptiven Auflösungsreduktion nach der Erfindung konnte Frameskipping vollständig vermieden werden, wobei bis zu 30% der Bilder in der Größe reduziert wurden. Die subjektive Qualität der decodierten Videosequenzen konnte erheblich erhöht werden.

Neben dem Füllstand des Bitpuffers können weitere Encoderparameter als Umschaltkriterien verwendet werden, bzw. auch die Kombination verschiedener Größen ist möglich. Wie bereits erwähnt, wird der Quantisierungsparameter QP im Rahmen der Rate Control zur Einstellung einer geforderten Bitrate variiert. Der QP steht in enger Beziehung zum Codieraufwand und damit zum Inhalt der Videosequenz. Er repräsentiert die Genauigkeit der Quantisierung. Je größer der Codieraufwand eines Abschnitts einer Videosequenz ist, desto größer wird der QP ausfallen, was einer gröberen Quantisierung entspricht. Dadurch ergeben sich auch mehr Blockartefakte. Daher kann der QP entweder direkt als Umschaltkriterium verwendet werden, bzw. er kann mit dem Pufferfüllstand kombiniert werden. Dazu müssen lediglich geeignete Schwellwerte bzw. kombinierte Kriterien angewendet werden.

Die Art der Unterabtastung gewährt weiteren Spielraum für Modifikationen im Rahmen der adaptiven Auflösungsreduktion nach der Erfindung. Alternativ zur Reduktion der horizontalen und vertikalen Auflösung ist auch die ausschließliche Verringerung der horizontalen Größe des Bildes möglich. Dies ist insbesondere bei Zeilensprungformaten wie CCIR601 sinnvoll, da hierbei durch die zwei zeitlich versetzten Halbbilder bereits eine Reduktion der vertikalen Auflösung vorliegt. Im Prinzip ist bei Verwendung entsprechender Unterabtastungsfilter auch jeder beliebige Reduktionsfaktor neben der Halbierung des Formats möglich.

Literatur:
[1] A. Smolić, K. Rümmler, J.-R. Ohm, R. Schäfer and S. Bauer, "MPEG-4 Video Transmission over DAB/DMB: Joined Optimization of Encoding and Format Conversion", Proc. MOMUC'98, International Workshop on Mobile Multimedia Communication, Berlin, Germany, October 12-14, 1998.
[2] ISO/IEC/JTC1/SC29/WG11, "MPEG-4 Video VM 16.0", Doc. N3312, Noordwijkerhout, Niederlande, März 2000.
[3] ITU SG 16 Q.15, "Video Coding for Low Bitrate Communication, ITU-T Recommendation H.263", Draft, 27.1.1998.

## Patentansprüche

1. Verfahren zur Codierung von Bildsequenzen mit folgenden Schritten:
- vor der eigentlichen Codierung wird geprüft, ob für ein aktuelles Bild der Videobildsequenz ein vorgegebener Kapazitätsparameter des Encoders (3) erreicht oder überschritten wird,
- in letzterem Falle wird eine Reduzierung des Codierformates insbesondere hinsichtlich seiner Auflösung vorgenommen und die Codierung für das aktuelle Bild in diesem reduzierten Codierformat vorgenommen.

2. Verfahren zur Decodierung von Bildsequenzen mit folgenden Schritten:
- nach oder während der eigentlichen Decodierung eines aktuellen Bildes wird geprüft, ob dieses aktuelle Bild einer vorherigen Reduzierung des Codierformates unterzogen wurde,
- in letzterem Falle wird das Codierformat dieses Bildes hochinterpoliert.

3. Verfahren nach Anspruch 1, **dadurch gekennzeichnet, dass** als vorgegebener Kapazitätsparameter der Pufferfüllstand des Bitstrompuffers (2) des Encoders (3) gewählt wird, und/oder der Quantisierungsparameter für die Codierung insbesondere der Transformationskoeffizienten.

4. Verfahren nach einem der Ansprüche 1 bis 3, **dadurch gekennzeichnet, dass** für die Reduzierung des Codierformates eine adaptiv vom Kapazitätsparameter gesteuerte Unterabtastung mit Tiefpaßfilterung des jeweiligen Bildes vorgenommen wird.

5. Verfahren nach einem der Ansprüche 1 bis 4, **dadurch gekennzeichnet, dass** bei einer Änderung des Codierformates ein syntaktischer Neubeginn der Codierung vorgenommen wird.

6. Verfahren nach Anspruch 5, **dadurch gekennzeichnet, dass** im Falle eines MPEG-4 Encoders bei Änderung des Codierformates der aktuelle VOL (Video Object Layer) abgebrochen wird, ein neuer VOL-Header geschrieben wird und der neue VOL mit einem INTRA-codierten Bild im neuen Codierformat initiiert wird.

7. Verfahren nach einem der Ansprüche 3 bis 6, **dadurch gekennzeichnet, dass** vor Bearbeitung eines folgenden Bildes zur Regulierung des Pufferfüllstandes die für die Codierung des Bildes benötigte Bitmenge registriert und zum Füllstand des Bitstrompuffers (2) hinzuaddiert wird, wobei die durchschnittlich vorgesehene Bitmenge subtrahiert wird.

8. Verfahren nach Anspruch 7, **dadurch gekennzeichnet, dass** für den Fall, dass sich der Füllstand des Bitstrompuffers (2) nach einer Reduzierung des Codierformates unter einen vorgegebenen Grenzwert bewegt, in einem erneut beginnenden Schleifendurchlauf auf das vorherige Codierformat mit voller Auflösung zurückgeschaltet wird.

9. Verfahren ach einem der Ansprüche 1 bis 8, **dadurch gekennzeichnet, dass** die Reduzierung des Codierformates und/oder eine spätere Aufhebung der Reduzierung über mehreren Auflösungsstufen durchgeführt wird.

10. Verfahren nach einem der Ansprüche 1 bis 9, **dadurch gekennzeichnet, dass** die Aufhebung der Reduzierung des Codierformates bzw. deren erneute Einschaltung durch einen Hysteresemechanismus eingeschränkt wird.

11. Verfahren nach Anspruch 10, **dadurch gekennzeichnet, dass** der Hysterese-Mechanismus vorgibt, dass eine vordefinierte Mindestanzahl an Einzelbildern der Bildsequenz unverändert bleibt, unabhängig vom Füllstand des Bitstrompuffers.

12. Verfahren nach einem der Ansprüche 4 bis 11, **dadurch gekennzeichnet, dass** die Unterabtastung mit Tiefpaßfilterung zumindest in horizontaler Richtung vorgenommen wird.

13. Verfahren nach Anspruch 2, **dadurch gekennzeichnet, dass** zur Prüfung, welche/s Bild/er einer vorherigen Reduzierung des Codierformates unterzogen wurde/n, eine Information herangezogen wird, die dem Decoder bekannt ist oder als Systeminformation übertragen wird, z. B. im Falle von MPEG-4 die Scene Composition Information.

14. Verfahren nach einem der Ansprüche 2 bis 12, **dadurch gekennzeichnet, dass** entsprechend des decoderseitig verwendeten Displays (15) zur Wiedergabe der decodierten Bilder jedes reduzierte Codierformat entsprechend vergrößert wird.

15. Codiereinrichtung zur Codierung von Bildsequenzen bestehend aus:
- einem eigentlichen Encoder (3) zur Aufbereitung von komprimierten Bilddaten,
- einem Vorschaltmodul (8) für den Encoder (3) zur Reduzierung des Codierformates,
- einer Umschaltsteuereinrichtung (4) für das Vorschaltmodul (8), welche mit dem Encoder (3) derart in Wirkverbindung steht, dass in Abhängigkeit eines vom Encoder (3) abgebbaren Kapazitätsparameters eine Umschaltung des Codierformates erfolgt.

16. Codiereinrichtung nach Anspruch 15, **dadurch gekennzeichnet, dass** von der Umschaltsteuerung (4) im Falle einer Codierformatänderung ein Steuersignal (9) an den Encoder (3) abgebbar ist zum Abbruch einer aktuellen Codierung und Neuaufbau eines insbesondere INTRA-codierten Bildes in einem geänderten Codierformat.

17. Decodiereinrichtung zur Decodierung von Bildsequenzen bestehend aus:
- dem eigentlichen Decoder (10)
- einer Codierformatänderungseinheit (14) für solche Bilder der Bildsequenz, die decoderseitig in einem reduzierten Codierformat vorliegen.

18. Decodiereinrichtung nach Anspruch 17, **dadurch gekennzeichnet, dass** eine Umschaltsteuerung (13) für die Codierformatänderungseinheit (14) vorgesehen ist, die aufgrund einer Information über das Codierformat beziehungsweise einer Systeminformation den Ausgang des eigentlichen Decoders (10) mit der Codierformatänderungseinheit (14) verbindet.

19. Decodiereinrichtung nach Anspruch 18, **dadurch gekennzeichnet, dass** die Codierformatänderungseinheit (14) eingerichtet ist, eine Bildpunktinterpolation innerhalb solcher Bilder vorzunehmen, deren Bildinformation zuvor ausgedünnt wurde.
